# EUROPEAN PATENT APPLICATION

(11) **EP 1 876 509 A1**
(43) Date of publication of application: **09.01.2008**
(21) Application number: 06731174.6
(22) Date of filing: 05.04.2006
(51) Int. Cl.: G06F 1/26

(54) **CARD ELECTRONIC DEVICE AND HOST DEVICE**

(30) Priority: 27.04.2005 JP 2005130295
(71) Applicant: MATSUSHITA ELECTRIC INDUSTRIAL CO., LTD., Osaka 571-8501 (JP)
(72) Inventor: NAKAMURA, Seiji c/o Matsushita El. Ind. Co. Ltd., 2-1-61, Shiromi, Chuo-ku, Osaka 540-6207 (JP)
(74) Representative: Pautex Schneider, Nicole Véronique
(86) International application number: PCT/JP2006/307226
(87) International publication number: WO 2006/117966

(57) **Abstract**

A card type electronic device according to the present invention comprises a p MOS switch (110) connected to a power supply line (104), a step-down regulator (107) for stepping down a power supply voltage, a voltage detection circuit (111) for detecting a power supply voltage value and outputting information as to whether the value exceeds a predetermined voltage value or not, a control circuit (112) for turning on the pMOS switch (110) to halt the step-down regulator (107) when the power supply voltage of the power supply line (104) is equal to or lower than the predetermined voltage value, and turning off the pMOS switch (110) to activate the step-down regulator (107) when the power supply voltage exceeds the predetermined voltage value, and an internal logic circuit (108) which is operated with the power supply voltage supplied via the pMOS switch (110) or the output voltage supplied from the step-down regulator (107), and performs control for a functional module (106) and communication control with external devices. Accordingly, even when the power supply voltages within two kinds of voltage ranges are supplied from the host device, power supply voltages within appropriate voltage ranges can be applied to the respective internal blocks.

## Description

### TECHNICAL FIELD

The present invention relates to a card-type electronic device which is operated by power supply voltages within two kinds of voltage ranges, and a host device for applying the power supply voltages to the card-type electronic device.

### BACKGROUND ART

In recent years, a card type electronic device equipped with a nonvolatile memory has been developed, and the market scale of the device has been expanded as storage media of host devices such as digital still cameras, handy phones, personal computers, portable digital music players, and the like.

For example, the card type electronic device is generally used as follows. That is, after a still picture taken by a digital still camera is stored in the card type electronic device, the card type electronic device is loaded in a personal computer, and the still picture is read by the personal computer and displayed on a display. On the other hand, card type electronic devices equipped with, instead of the nonvolatile memory, a radio LAN (Local Area Network) module, a GPS (Global Pointing System) module, a camera module, a digital terrestrial TV/radio reception tuner module for mobile equipment, and the like have also become widespread in the market.

In many cases, the card type electronic device and the host device are connected with each other by a power supply line, a ground line, and a signal line for transmitting a clock signal, a data signal, a command signal, a response signal and the like, and master/slave system communication is carried out with the host device being a master and the card type electronic device being a slave. The card type electronic device is supplied with a power supply voltage from the host device via the power supply line. Currently, the operation voltage of the card type electronic device is generally in a voltage range based on 3.3V (hereinafter referred to as "3.3V series voltage", e.g., 3.0V~ 3.6V or 2.7V~3. 6V) .

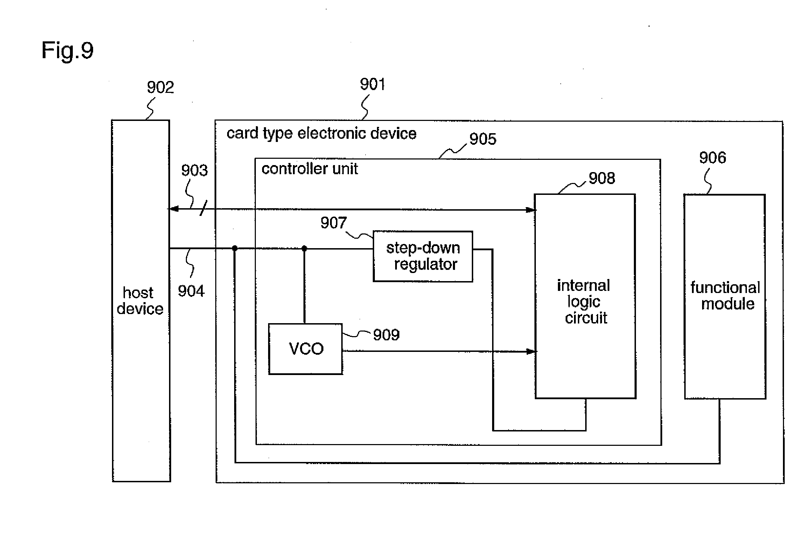

The conventional card type electronic device and host device will be described with reference to figure 9. In figure 9, the respective constituent blocks are connected by solid lines with arrows and solid lines without arrows. The solid lines with arrows indicate signal transmission lines, and the solid lines without arrows indicate power supply lines.

Figure 9 is a block diagram illustrating the conventional card type electronic device and host device. With reference to figure 9, the card type electronic device 901 is loaded in a card slot provided on the host device 902, and thereby it can communicate with the host device 902. When the card type electronic device 901 is loaded in the host device 902, it is electrically connected to the host device 902 by a signal line 903, a power supply line 904, and a ground line (not shown). The card type electronic device 901 is supplied with a power supply voltage from the host device 902 through the power supply line 904. The power supply voltage is 2.7V~3.6V. The signal line 903 comprises a clock line, a command/response line, at least one data line, and the like.

The card type electronic device 901 includes a controller 905 and a functional module 906. The controller 905 is a semiconductor such as a system LSI. It is assumed that the functional module 906 is a flash memory. The controller 905 and the functional module 906 are supplied with a power supply voltage of 2.7~3.6V from the power supply line 904.

The controller 905 includes a step-down regulator, an internal logic 908, and a VCO (Voltage Controlled Oscillator) 909. The controller 905 also includes IO cells, RAMs, and ROMs although they are not shown in the figure. Usually, several tens to several hundreds of IO cells are disposed in the system LSI according to the number of external devices to be connected, or the number of pins. The step-down regulator 907 and the VCO 909 are operated with a voltage of 2.7~3.6V. On the other hand, the operation voltages of the internal logic circuit 908, the RAM, and the ROM vary depending on the process conditions. For example, generally, the operation voltage is 1.65V~1.95V for the process condition of 0.18 µm, 1.35V~1.65V for 0.15µm, and 1.15V ~1.45V for 0.13 *µ* m. However, the operation voltages also vary depending on the purpose of use, the threshold voltage, or the like. In this example, it is assumed that the process condition is 0.18µm, and the operation voltages for the internal logic circuit 908, the RAM, and the ROM are 1.65V~1.95V (1.8V series).

The controller 905 receives the voltage of 2.7~3.6V supplied from the power supply line 904, by an IO cell (3.3V series voltage input cell). Thereafter, the power supply voltage is applied to the step-down regulator 907 and to the VCO 909 through an IO cell. The step-down regulator 907 converts the inputted voltage of 2.7~3.6V into a voltage of 1.65~1.95V. The output voltage of the step-down regulator 907 is once outputted from an IO cell (1.8V series voltage output cell) to the outside of the controller 905, and thereafter, it is smoothed by a capacitor (not shown), and again input to the controller 905 via another IO cell (1.8V series voltage input cell). Then, the 1.8V series voltage is supplied to the internal logic circuit 908, the RAM, and the ROM. The VCO 909 receives the voltage of 2.7~3.6V and oscillates when clock oscillation is allowed, and then applies a clock signal having an amplitude of 1.8V series voltage to the internal logic circuit 908. The internal logic circuit 908 executes processings such as control of communication with the host device 902, and write/read/deletion of data to/from the functional module 906. Since the host device 902, the functional module 906, and the internal logic circuit 908 perform communication with a 3.3V series voltage, IO cells disposed between them are provided with level shifters.

As described above, the power supply voltage is applied from the host device 902 to the respective constituent blocks in the card type electronic device 901.
Patent Document 1: Japanese Published Patent Application No. Hei.5-6465
Patent Document 2: Japanese Published Patent Application No. 2002-351813

### DISCLOSURE OF THE INVENTION

Conventionally, the power supply voltage that is supplied from the host device to the card type electronic device is a 3.3V series voltage in many cases. However, because of a demand for low power consumption from the market, it has become necessary to operate the card type electronic device in a voltage range lower than the 3.3V series voltage. On the other hand, since the card type electronic device which operates with a voltage lower than the 3.3V series voltage (e.g., 1.8V series voltage) cannot be used in the already-marketed host device (which supplies 3.3V series voltage), it has no appeal to users. Therefore, there is a demand for a card type electronic device which can operate with both of the 3.3V series voltage (the conventional application voltage) and the voltage lower than the 3.3V series voltage (e.g., 1.8V series voltage).

In the conventional card type electronic device shown in figure 9, however, if the VCO 909 and the functional module 906 are made to be adaptable to both the 3.3V series voltage and the voltage lower than the 3.3V series voltage (e.g., 1.8V series voltage), design of these elements becomes complicated. Especially, since the VCO 909 is supplied with the power supply voltage directly from the power supply line 904, the VCO 909 must be adapted to both the 3.3V series voltage and the 1.8V series voltage, and thereby design of the VCO 909 is complicated.

Further, in the conventional card type electronic device shown in figure 9, only the 3.3V series voltage is evaluated. However, if it is supplied with both the 3.3V series voltage and a voltage lower than the 3.3V series voltage (e.g., 1.8V series voltage), evaluation must be performed for both of the voltage ranges, leading to an increase in the evaluation items.

Furthermore, in the conventional card type electronic device shown in figure 9, if the step-down regulator is supplied with an input voltage that is lower than an expected output voltage, an output transistor is completely turned on, and the output voltage of the step-down regulator drops due to IR drop between the on resistance and the current. Therefore, when a large current flows into the internal logic circuit, the RAM, and the ROM which are loads, the output voltage considerably drops, leading to a program that a necessary voltage cannot be applied to the loads.

Furthermore, in the conventional card type electronic device shown in figure 9, also when the functional module needs an instantaneous large current, the output voltage of the step-down regulator drops temporarily.

The present invention is made to solve the above-described problems and has for its object to provide a card type electronic device having a simple circuit construction, which is able to apply a power supply voltage within an appropriate voltage range to each of internal blocks, even when it is supplied with a power supply voltage that is either a 3.3V series voltage or a voltage lower than the 3.3V series voltage (e.g., 1.8V series voltage) from a host device.

It is another object of the present invention to provide a card type electronic device which can continuously apply an appropriate power supply voltage to each of internal blocks even when it is supplied with a power supply voltage that is either a 3.3V series voltage or a voltage lower than the 3.3V series voltage (e.g., 1.8V series voltage) from a host device, and a constant large current or an instantaneous large current is needed for operating an internal logic circuit or a functional module, and a host device for applying a power supply voltage to the card type electronic device.

### MEASURES TO SOLVE THE PROBLEMS

A card type electronic device according to the present invention comprises a power supply line which receives, from a host device, a power supply voltage within a first voltage range and a power supply voltage within a second voltage range that is lower than the first voltage range; a functional module which operates within the second voltage range to perform predetermined functions; a pMOS switch connected to the power supply line; a step-down regulator connected to the power supply line, for stepping down the power supply voltage of the power supply line to the second voltage range; a voltage detection circuit for detecting a power supply voltage value of the power supply line to output information as to whether the power supply voltage value exceeds a predetermined voltage value or not; a control circuit which receives the information from the voltage detection circuit, and turns on the pMOS switch and halts the step-down regulator when the power supply voltage of the power supply line is equal to or lower than the predetermined voltage value, while turns off the pMOS switch and activates the step-down regulator when the power supply voltage of the power supply line exceeds the predetermined voltage value; and an internal logic circuit which is operated with the power supply voltage via the pMOS switch or the output voltage from the step-down regulator to perform control of the functional module or control of communication with the outside.

Further, in the card type electronic device according to the present invention, the voltage detection circuit detects whether the power supply voltage of the power supply line exceeds a maximum value in the second voltage range or not.

Further, the card type electronic device according to the present invention further includes an oscillator for generating a clock signal for operating the internal logic circuit, and the oscillator is operated with the power supply voltage via the pMOS switch or the output voltage from the step-down regulator.

Further, in the card type electronic device according to the present invention, the control circuit halts the step-down regulator after turning on the pMOS switch when the power supply voltage of the power supply line is equal to or lower than the predetermined voltage, while the control circuit turns off the pMOS switch after activating the step-down regulator when the power supply voltage of the power supply line exceeds the predetermined voltage value.

Further, the card type electronic device according to the present invention further includes at least one signal line for transmitting/receiving a clock signal, a command signal, a response signal, and a data signal between the internal logic circuit and the host device; before the card type electronic device is initialized by the host device, the internal logic circuit receives voltage range information of a power supply voltage to be supplied from the host device during initialization and after initialization, from the host device through the signal line, and then outputs the received information to the control circuit; and the control circuit receives the information from the voltage detection circuit and the internal logic circuit, and turns on the pMOS switch and halts the step-down regulator only when the power supply voltage of the power supply line is equal to or lower than the predetermined value and the information of the second voltage range is supplied from the internal logic circuit as the voltage range information, and otherwise, the control circuit turns off the pMOS switch and activates the step-down regulator.

Further, in the card type electronic device according to the present invention, when the power is turned on, the internal logic circuit outputs a control signal for turning off the pMOS switch to the control circuit.

Further, in the card type electronic device according to the present invention, the internal logic circuit has an initial state operating part that operates before initialization, and only the initial state operating part operates before initialization to receive the voltage range information from the host device, and generate a control signal for tuning off the pMOS switch.

Further, the card type electronic device according to the present invention further includes a relay circuit for selectively switching the power supply voltage applied to the functional module, which relay circuit is connected to two kinds of lines, i.e., the output line of the step-down regulator or the output line of the pMOS switch and the power supply line; and the relay circuit selects the power supply line when the pMOS switch is on to apply the power supply voltage to the functional module.

Further, the card type electronic device according to the present invention further includes at least one signal line for transmitting/receiving a clock signal, a command signal, a response signal, and a data signal between the internal logic circuit and the host device, a second power supply line for the functional module, and a relay circuit for selectively switching the power supply voltage applied to the functional module, which relay circuit is connected to two kinds of lines, i.e., the output line of the step-down regulator or the output line of the pMOS switch and the power supply line; the internal logic circuit has a relay control circuit for controlling the relay circuit; and the relay control circuit previously holds information as to whether the power supply voltage can be supplied from the second power supply line to the functional module or not, and when the relay control circuit receives, from the host device, a command signal instructing application of the power supply voltage from the second power supply line, it outputs a switching signal to the relay circuit to make the relay circuit select the power supply voltage of the second power supply line as a power supply voltage for the functional module.

Further, a host device according to the present invention comprises a central processing unit for generating a command signal, a clock signal, or a data signal to be transmitted to a card type electronic device, and receiving and processing a response signal or a data signal transmitted from the card type electronic device; a power supply line for applying a power supply voltage to the card type electronic device; at least one signal line for receiving/transmitting the clock signal, the command signal, the response signal, and the data signal from/to the card type electronic device; and a second power supply line for a functional module included in the card type electronic device; and the central processing unit transmits a command signal that inquires the card type electronic device as to whether application of the power supply voltage by the second power supply line is possible or not, and when the central processing unit obtains information indicating that application of the power supply voltage by the second power supply line is possible, as a response signal from the card type electronic device, it transmits a command signal indicating that application of the power supply voltage is to be started from the second power supply line to the card type electronic device, and then starts application of the power supply voltage from the second power supply line.

### EFFECTS OF THE INVENTION

The card type electronic device according to the present invention is supplied with a power supply voltage within a first voltage range or a power supply voltage within a second voltage range that is lower than the first voltage range, from the host device. When the power supply voltage in the first voltage range is applied, the power supply voltage in the first voltage range is stepped down to the power supply voltage in the second voltage range by the step-down regulator, and the stepped-down power supply voltage is applied to the subsequent blocks such as the functional module that performs predetermined functions and the internal logic circuit that performs control of the functional module and control of communication with the outside. When the power supply voltage in the second voltage range is applied, the power supply voltage from the power supply line is applied through the pMOS switch to the subsequent blocks such as the functional module and the internal logic circuit. Therefore, whichever power supply voltage, i.e., the power supply voltage in the first voltage range or the power supply voltage in the second voltage range, is supplied from the host device, a power supply voltage in an appropriate voltage range can be applied to each internal block.

Further, in the card type electronic device according to the present invention, when the power supply voltage is applied to the subsequent blocks such as the functional module and the internal logic circuit through the pMOS switch, the step-down regulator is halted. Therefore, low power consumption is realized.

Further, in the card type electronic device according to the present invention, a value of the power supply voltage supplied from the host device is detected by the voltage detection circuit, and the power supply voltage that is stepped down by the step-down regulator is applied to the subsequent blocks such as the functional module and the internal logic circuit when the power supply voltage exceeds a maximum value in the second voltage range, while the power supply voltage of the power supply line is applied to the subsequent blocks such as the functional module and the internal logic circuit through the pMOS switch when the power supply voltage is equal to or lower than the maximum value in the second voltage range. Therefore, it is possible to prevent destruction or lifetime reduction due to excessive voltages in the subsequent blocks such as the functional module and the internal logic circuit which operate with only the power supply voltage in the second voltage range.

Further, the card type electronic device according to the present invention includes the VCO for supplying a clock signal to the internal logic circuit, and the VCO is operated with the power supply voltage that is stepped down by the step-down regulator or the power supply voltage supplied via the pMOS switch. Therefore, it is possible to deal with both of the voltage in the first voltage range and the voltage in the second voltage range by a simple circuit construction. That is, it is possible to realize a circuit construction that is easy in design and has less evaluation steps.

In the card type electronic device according to the present invention, when the power supply voltage is applied to the internal logic circuit or the functional module through the pMOS switch, the step-down regulator is halted after the pMOS switch is turned on. When the output voltage of the step-down regulator is applied to the internal logic circuit or the functional module, the pMOS switch is turned off after the step-down regulator is activated. Therefore, there is no timing when both of the pMOS switch and the step-down regulator are simultaneously off, whereby a power supply voltage in an appropriate voltage range can be stably applied to each internal block.

The card type electronic device according to the present invention receives, before initialization, voltage range information of power supply voltages to be supplied during initialization and after initialization from the host device, and it turns on the pMOS switch and then halts the step-down regulator only when the power supply voltage of the power supply line is equal to or lower than a predetermined voltage value and it receives information of the second voltage range as the voltage range information. Otherwise, the card type electronic device turns off the pMOS switch and then activates the step-down regulator. Therefore, even when the host device drops the power supply voltage from the first voltage range to the second voltage range after it transmits the voltage range information of the power supply voltages to be applied during initialization and after initialization to the card type electronic device, it is possible to prevent the power supply voltage in the first voltage range from being applied to the blocks that operate with the power supply voltage in the second voltage range, regardless of the timing of the voltage drop.

In the card type electronic device according to the present invention, the pMOS switch is turned off when the power supply is turned on. Therefore, even if the host device drastically increases the voltage when the power supply is turned on, it is possible to prevent the power supply voltage in the first voltage range from being applied to the blocks that operate with the power supply voltage in the second voltage range.

In the card type electronic device according to the present invention, the internal logic circuit has an initial state operating part that operates before initialization, and the internal logic circuit before initialization operates only this initial state operating part to generate a control signal that instructs communication with the host device and turn-off of the pMOS switch. Therefore, even when performing communication with the host device before initialization, only a minimum current flows, whereby a power supply voltage in an appropriate voltage range can be stably applied to each internal block before initialization.

The card type electronic device according to the present invention includes a power supply line for the functional module (second power supply line), and when the power supply voltage in the second voltage range is supplied from the host device, the power supply voltage is supplied from the second power supply line to the functional module. Therefore, even when the functional module needs a constant large current, a power supply voltage in a stable and appropriate voltage range can be applied to each internal block.

The card type electronic device according to the present invention includes a power supply line for the functional module (second power supply line), and when it receives a command signal indicating that the power supply voltage is to be supplied through the second power supply line from the host device, it applies the power supply voltage to the functional module from the second power supply line. Therefore, even when the functional module needs an instantaneous large current, a power supply voltage in a stable and appropriate voltage range can be applied to each internal block.

A host device according to the present invention includes a power supply line for applying a power supply voltage to the card type electronic device, and a second power supply line for a functional module included in the card type electronic device, and transmits a command signal that inquires the card type electronic device as to whether application of the power supply voltage by the second power supply line is possible or not, and when the host device obtains information indicating that application of the power supply voltage by the second power supply line is possible, as a response signal from the card type electronic device, it transmits a command signal indicating that application of the power supply voltage is to be started from the second power supply line to the card type electronic device, and then starts application of the power supply voltage from the second power supply line. Therefore, even when the card type electronic device is equipped with the functional module that needs an instantaneous large current, a power supply voltage in an appropriate voltage range can be stably applied to the card type electronic device.

### BRIEF DESCRIPTION OF THE DRAWINGS

Figure 1 is a block diagram illustrating the construction of a card type electronic device according to a first embodiment of the present invention.
Figure 2 is a diagram illustrating a switching operation of a pMOS switch in the card type electronic device according to the first embodiment of the present invention.
Figure 3 is a block diagram illustrating the construction of a card type electronic device according to a second embodiment of the present invention.
Figure 4 is a flowchart illustrating the operation until the card type electronic device of the second embodiment starts initialization.
Figure 5 is a flowchart illustrating the operation until the card type electronic device of the second embodiment starts initialization.
Figure 6 is a block diagram illustrating the construction of a card type electronic device according to a third embodiment of the present invention.
Figure 7 is a block diagram illustrating the constructions of a card type electronic device and a host device according to a fourth embodiment of the present invention.
Figure 8 is a flowchart illustrating the operation when the host device of the fourth embodiment applies a power supply voltage through a second power supply line.
Figure 9 is a block diagram illustrating the construction of the conventional card type electronic device.

### DESCRIPTION OF REFERENCE NUMERALS

101,301,601,701,901 ... card type electronic device
102,302,602,702,902 ... host device
103,903 ... signal line
104,904 ... power supply line
105,305,605,705,905 ... controller unit
106, 906 ... functional module
107,907 ... step-down regulator
108, 308, 708, 908 ... internal logic circuit
109,909 ... VCO
110 ... pMOS switch
111 ... voltage detection circuit
112, 312, 612 ... control circuit
313 ... initial state halting part
314 ... initial state operating part
615,715 ... relay circuit
716 ... second power supply line
717 ... relay control unit
718 ... CPU

### BEST MODE TO EXECUTE THE INVENTION

Hereinafter, embodiments of the present invention will be described with reference to the drawings.

### (Embodiment 1)

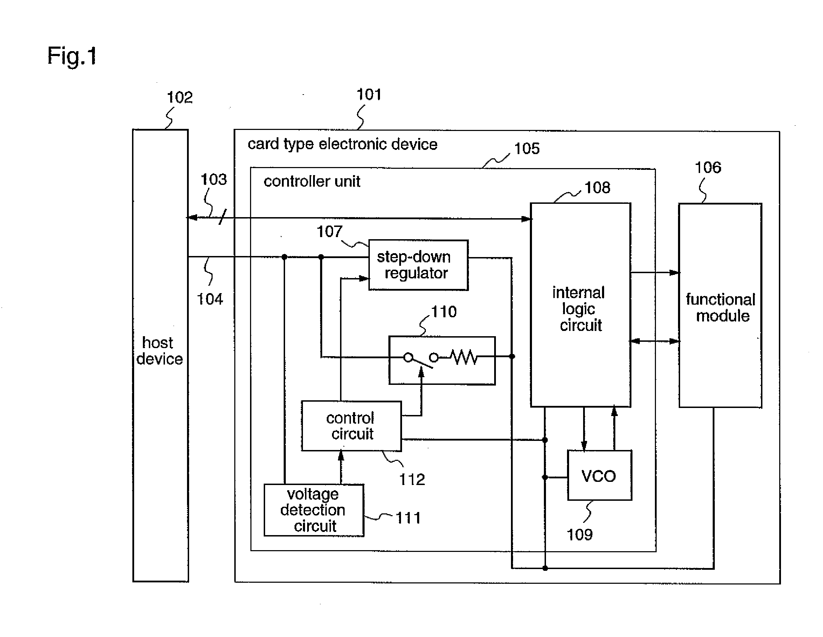

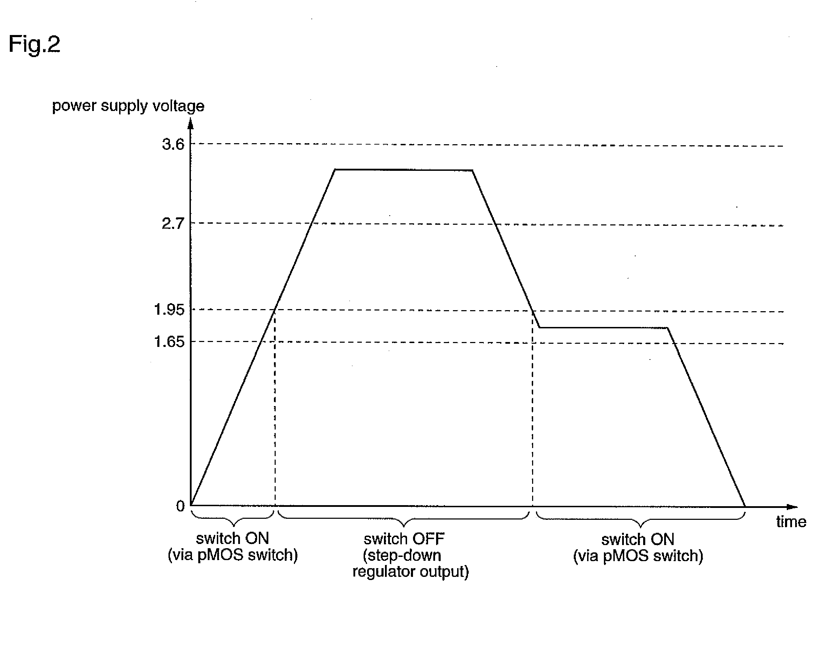

A card type electronic device according to a first embodiment of the present invention will be described with reference to figures 1 and 2. In this first embodiment, it is assumed that the card type electronic device is a memory card equipped with a flash memory. However, the card type electronic device of the present invention is not restricted to the memory card, and it may be a function expansion card having functions such as radio LAN and GPS.

Figure 1 is a block diagram illustrating the construction of the card type electronic device according to a first embodiment of the present invention. In figure 1, it is assumed that a host device 102 is a digital camera having an insertion slot for the card type electronic device 101. The card type electronic device 101 is loaded in the slot of the host device 102, whereby the device 101 can communicate with the host device 102. When the card type electronic device 101 is loaded in the host device 102, it is electrically connected to the host device 102 by a signal line 103, a power supply line 104, a ground line (not shown), and the like. In figure 1, the respective constituent blocks are connected with each other by solid lines with arrows and solid lines without arrows, and the solid lines with arrows indicate signal transmission lines while the solid lines without arrows indicate power supply lines.

The host device 102 and the card type electronic device 101 are connected with each other by at least one signal line 103, the power supply line 104, and the ground line (not shown). The signal line 103 comprises a clock line, a command/response line, at least one data line, and the like. The clock line is for transmitting a clock signal from the host device 102 to the card type electronic device 101. The command/response line is for transmitting a command signal from the host device 102 to the card type electronic device 101, and transmitting a response signal from the card type electronic device 101 to the host device 102. The data line is for bidirectionally transmitting a data signal between the host device 102 and the card type electronic device 101. The host device 102 and the card type electronic device 101 perform master/slave system communication with the host device 102 being a master and the card type electronic device 101 being a slave.

The card type electronic device 101 includes a controller unit 105 and a functional module 106. The controller unit 105 includes a step-down regulator 107, an internal logic circuit 108, a VCO 109, a pMOS switch 110, a voltage detection circuit 111, and a control circuit 112. The controller unit 105 also includes IO cells, ROMs, and RAMs (not shown).

The host device 102 applies a power supply voltage to the card type electronic device 101 through the power supply line 104. The host device 102 applies a power supply voltage within a voltage range of 2.7V~3.6V or 1.65V~1.95V to the card type electronic device 101. The variation speed of the voltage applied by the host device 102 is such a speed that the voltage detection circuit 111 can detects the voltage value without a considerable error. Hereinafter, a voltage within the voltage range of 2.7V~3.6V is referred to as a 3.3V series voltage, and a voltage within the voltage range of 1.65V~1.95V is referred to as a 1.8V series voltage.

The card type electronic device 101 includes blocks which continue to operate even when a 3.3V series voltage is applied thereto, and blocks which might be reduced in lifetime or destroyed when a voltage exceeding 1.95V, e.g., a 3.3V series voltage, is applied thereto. In the controller unit 105, the step-down regulator 107, the pMOS switch 110, the voltage detection circuit 111, and the IO cells normally operate even when supplied with the 3.3V series voltage. On the other hand, the internal logic circuit 108, the VCO 109, the control circuit 112, the ROM, and the RAM might be destroyed when supplied with the 3.3V series voltage. Further, also the functional module 106 might be reduced in lifetime or destroyed when supplied with the 3.3V series voltage.

The controller unit 105 is constituted by a system LSI, and performs transmission/reception of signals with devices/blocks in the vicinity of the controller unit 105 via IO cells. A level shifter which performs level conversion between the 3.3V series voltage and the 1.8V series voltage is incorporated in an IO cell that is disposed between the controller unit 105 and a device which performs signal transmission/reception with the 3.3V series voltage, like the host device 102. On the other hand, no level shifter is incorporated in an IO cell disposed between the controller unit 105 and a block which operates with the 1.8V series voltage, such as the functional module 106.

The internal logic circuit 108 receives a clock signal from the host device 102 and a clock signal from the VCO 109, and performs control for transmission of signals with the host device 102, control for write/read/deletion of data to/from the functional module 106, and control for oscillation/halting of the VCO 109. Further, the internal logic circuit 108 performs write/read of data to/from the ROM and the RAM according to need.

The VCO 109 oscillates when it is supplied with the 1.8V series voltage and receives an oscillation enable signal from the internal logic circuit 108, and outputs a clock signal to the internal logic circuit 108.

The voltage detection circuit 111 measures the voltage value of the power supply voltage applied from the power supply line 104. When the power supply voltage is lower than a predetermined voltage value, the voltage detection circuit 111 outputs information indicating that the power supply voltage is equal to or lower than the predetermined value, e.g., a High signal, to the control circuit 112. On the other hand, when the power supply voltage exceeds the predetermined voltage value, the voltage detection circuit 111 outputs information indicating that the power supply voltage exceeds the predetermined value, e.g., a Low signal, to the control circuit 112. Thereby, the control circuit 112 can perform switching between the output of the pMOS switch 110 and the output of the step-down regulator 107 on the basis of the predetermined voltage value. The predetermined voltage value should be set to an appropriate value to prevent the 3.3V series voltage from being applied to the subsequent blocks that operate with the 1.8V series voltage.

When the voltage value of the power supply voltage is equal to or lower than 1.95V which is the maximum value of the 1.8V series voltage, the voltage detection circuit 111 outputs a signal indicating that the power supply voltage is equal to or lower than 1.95V (e.g., a High signal) to the control circuit 112. When the voltage value of the power supply voltage exceeds 1.95V, it outputs a signal indicating that the power supply voltage exceeds 1.95V (e.g., a Low signal) to the control circuit 112. Since switching between the output of the pMOS switch 110 and the output of the regulator 107 is carried out on the basis of 1.95V that is the maximum value of the 1.8V series voltage, the power supply voltage higher than the support voltage is not applied to the subsequent blocks that operate with the 1.8V series voltage. Hereinafter, it is premised that the predetermined voltage value is 1.95V.

The step-down regulator 107 is constituted by a linear regulator. The step-down regulator 107 steps down the power supply voltage applied from the power supply line 104, and outputs the 1.8V series voltage. When the power supply voltage is lower than the 1.8V series voltage, the step-down regulator 107 outputs a voltage that is obtained by IR-dropping the power supply voltage by a product calculated between the current consumption of the subsequent block that operates with the 1.8V series voltage and the ON resistance of the output transistor. Further, the step-down regulator 107 stops when it receives a stop signal from the control circuit 112, and the output of the step-down regulator 107 is in the high impedance state. When the step-down regulator 107 is stopped, no power consumption occurs in the step-down regulator 107, leading to a reduction in power consumption.

The pMOS switch 110 receives the power supply voltage supplied from the power supply line 104. When the pMOS switch 110 receives an ON signal from the control circuit 112, it outputs the inputted power supply voltage almost as it is to the subsequent block. Although a slight voltage drop occurs due to the resistance in the pMOS switch 110, it is regarded as a negligible level in this first embodiment. On the other hand, when the pMOS switch 110 receives an OFF signal from the control circuit 112, it outputs no voltage to the subsequent block.

The power supply voltage thus supplied from the power supply line 104 via the IO cell is input to both the step-down regulator 107 and the pMOS switch 110. The output of the step-down regulator 107 and the output of the pMOS switch 110 are again combined as a single power supply line, and it is once outputted to the outside of the controller unit 105 through the IO cell. Then, the voltage is smoothed by a capacitor (not shown) provided outside the controller unit 105, and applied as a 1.8V series voltage to the blocks operating at the 1.8V series voltage (the internal logic circuit 108 and the functional module 106).

When the control circuit 112 receives the information indicating that the power supply voltage of the power supply line 104 is equal to or lower than 1.95V, e.g., a High signal, from the voltage detection circuit 111, it outputs an ON signal to the pMOS switch 110 to turn on the switch. Then, the control circuit 112 waits until the pMOS switch 110 is actually turned on, i.e., until the switch is completely closed and application of the power supply voltage to the subsequent block is started. Thereafter, the control circuit 112 halts the step-down regulator 107. On the other hand, when the control circuit 112 receives the information indicating that the power supply voltage of the power supply line 104 exceeds 1.95V, e.g., a Low signal, it activates the step-down regulator 107. After the step-down regulator 107 starts operation, the control signal 112 outputs an OFF signal to the pMOS switch 110 to turn off the switch. As described above, the control circuit 112 avoids the state where both the step-down regulator 107 and the pMOS switch 110 are in their OFF states when the pMOS switch 110 is turned on/off, whereby the 1.8V series voltage can be applied to the subsequent blocks with stability.

Figure 2 is a diagram illustrating which one of the step-down regulator 107 and the pMOS switch 110 is selected as a route through which the power supply voltage is applied to the block that operates with the 1.8V series voltage, when the voltage applied from the host device 102 varies. In figure 2, it is assumed that the power supply voltage from the host device 102 is initially the 3.3V series voltage, and thereafter, drops to the 1.8V series voltage, and finally, drops to 0V (power OFF). As shown in figure 2, when the power supply voltage is equal to or lower than 1.95V, it is applied to the subsequent block through the pMOS switch 110. When the power supply voltage exceeds 1.95V, it is applied to the subsequent block through the step-down regulator 107.

As described above, in the card type electronic device 101 according to the first embodiment, when the voltage supplied from the host device 102, is the 3.3V series voltage, the output voltage of the step-down regulator 107 is applied to the blocks that operate with only the 1.8V series voltage, and when the voltage supplied from the host device 102 is the 1.8V series voltage, the power supply voltage via the pMOS switch 110 is applied to the blocks. Therefore, a power supply voltage within an appropriate voltage range can be stably applied to each of the internal blocks.

While the first embodiment is described using two kinds of voltages, i.e., a 3.3V series voltage and a 1.8V series voltage, the present invention is not restricted by these voltage values.

### (Embodiment 2)

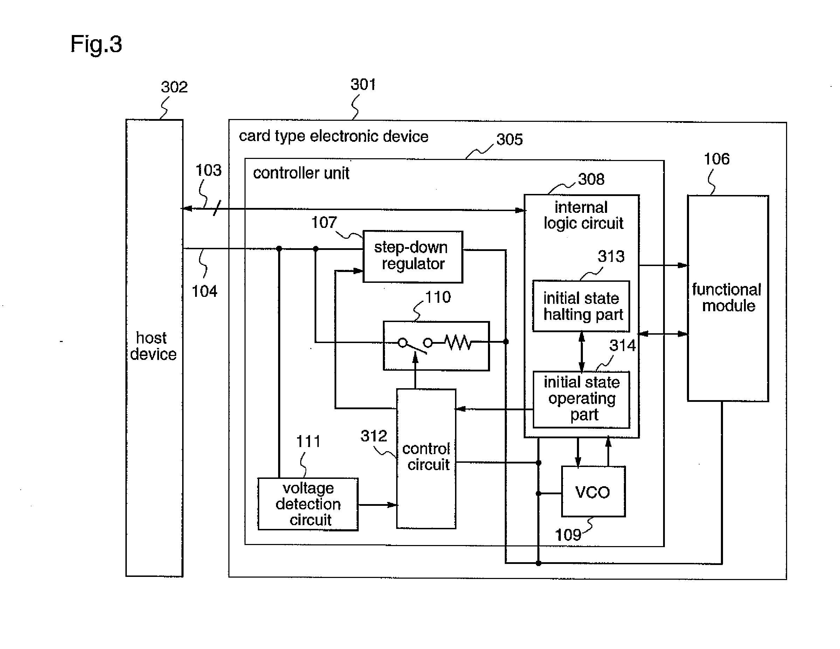

A card type electronic device according to a second embodiment of the present invention will be described with reference to figures 3 to 5. The card type electronic device according to the second embodiment is a function expansion card equipped with a GPS function. However, the card type electronic device of the present invention is not restricted to the function expansion card having a GPS function.

Figure 3 is a block diagram illustrating the construction of the card type electronic device according to the second embodiment. In figure 3, the same blocks as those of the card type electronic device according to the first embodiment shown in figure 1 are given the same reference numerals to omit description thereof. In figure 3, the respective constituent blocks are connected with each other by solid lines with arrows and solid lines without arrows, and the solid lines with arrows indicate signal transmission lines while the solid lines without arrows indicate power supply lines. In figure 3, a host device 302 is a handy phone having an insertion slot for the card type electronic device 301.

The card type electronic device 301 according to the second embodiment is different from the device according to the first embodiment in that the voltage ranges of the application voltage during initialization and after initialization are set according to command signals from the host device 302. In the case where the voltage ranges of the application voltage are set by the host device 302, there is a period in which the voltage range indicated by the command signal transmitted from the host device 302 differs from the voltage range of the power supply voltage actually applied from the host device 302, such as a period when the host device 302 changes the voltage range of the actually applied power supply voltage, before and after initialization.

Accordingly, in the card type electronic device 301 according to the second embodiment, the internal logic circuit 308 receives the command signal including the voltage range information of the application voltage from the host device 302, and outputs the information to the control circuit 312. The control circuit 312 controls ON/OFF of the pMOS switch 110 and the step-down regulator 107 on the basis of both the information from the voltage detection circuit 111 and the information from the internal logic circuit 308.

Further, in this second embodiment, it is premised that the variation speed of the application voltage of the host device is higher than that of the first embodiment, and thereby the power supply voltage increases and exceeds 1.95V before the pMOS switch 110 is completely turned on after the voltage detection circuit 111 detects that the power supply voltage is 1.95V. The card type electronic device 301 according to the second embodiment has a circuit construction considering this point.

Hereinafter, a specific description will be given of the operation of the host device 302 to set a voltage range of the application voltage according to a command signal, and the operation of the card type electronic device 301 to control the pMOS switch. Initially, the operation of the host device 301 will be described. The host device 302 transmits a command signal to the card type electronic device 301, and reads voltage range information that is supported by the card type electronic device 301 according to a response from the card type electronic device 301. When the read voltage range matches the voltage range that can be applied to the card type electronic device 301, the host device 302 judges that the card type electronic device 301 is available, and transmits a command instructing initialization (initialization command), thereby instructing the card type electronic device 301 to perform initialization. The "initialization" means that the controller unit 305 in the card type electronic device 301 constructs an operation profile in accordance with the type and state of the functional module 106. Unless the card type electronic device 301 is initialized, the host device 302 cannot use the functions of the functional module included in the card type electronic device 301. For example, when the functional module 106 is a GPS module, the host device 302 cannot read positional information obtained by the GPS module from the card type electronic device 301 unless the card type electronic device 301 is initialized. The host device 302 set voltage range information of voltages to be applied during initialization and after initialization, on the card type electronic device 301, according to the initialization command signal.

For example, assuming that the host device 302 applies a 3.3V series voltage to the card type electronic device 301 before initialization and applies a 1.8V series voltage during and after initialization, the host device 302 issues an initialization command including the voltage range information of the application voltage to be applied during and after initialization, and transmits the command signal to the card type electronic device 301. After the host device 302 receives a response signal from the card type electronic device 301 as a response to the command signal, it lowers the voltage range of the power supply voltage to the 1.8V series voltage.

Next, the operation of the internal logic circuit 308 will be described. The internal logic circuit 308 is divided into an initial state operating part 314 and an initial state halting part 313. The initial state operating part 314 is operated by only a clock signal from the host device 302, and it is operated even before the card type electronic device 301 is initialized, to exchange a command signal and a response signal with the host device 302. The initial state operating part 314 has an operation voltage storage register and an operation voltage range setting register. The operation voltage storage register previously holds the operation voltage range information of the card type electronic device 301. When the operation voltage storage register receives, from the host device 302, a command signal instructing transmission of the operation voltage range information, it transits a response signal including the operation voltage range information to the host device 302. Further, when the operation voltage storage register receives the command signal from the host device 302, it sets the voltage range information included in the command signal on the operation voltage range setting register, and thereafter, transmits the response signal. When the voltage value that is set in the operation voltage range setting register is within the voltage range indicated by the operation voltage range information stored in the operation voltage storage register, the initial state operating part 314 sets the VCO 109 in the operation start state. Then, the initial state halting part 313 is supplied with a clock signal from the VCO 109, and starts to operate. The operation voltage range setting register shows a value indicating a 3.3V series voltage (e.g., Low) when the power is turned on. When the operation voltage range setting register receives the command signal from the host device 302 and information indicating that a 1.8V series voltage should be used (e.g., High) is set on the register as the voltage range information, the operation voltage range setting register is turned to High. The initial state operating part 314 outputs a High signal or a Low signal to the control circuit 312 on the basis of the value of the operation voltage range setting register.

The voltage detection circuit 111 outputs, to the control circuit 312, information indicating the 1.8V series voltage (e.g., High signal) when the power supply voltage supplied from the power supply line 104 via an IO cell is equal to or lower than 1.95V, and information indicating the 3.3V series voltage (e.g., Low signal) when the power supply voltage exceeds 1.95V.

The control circuit 312 receives the information from the voltage detection circuit 111 and the operation voltage range information from the initial state operating part 314, i.e., working voltage information (High signal or Low signal). Only when the both inputs are information indicating the 1.8V series voltage, i.e., only when the both input signals are High, the control circuit 312 turns on the pMOS switch 110 and sets the step-down regulator 107 in the halting state. Otherwise, the control circuit 312 turns off the pMOS switch, and sets the step-down regulator 107 in the operating state. For example, if the pMOS switch 110 turns off with the Low signal and turns on with the High signal, the control circuit 312 can be constituted by an AND circuit.

When the power is turned on, since the value of the operation voltage range setting register is always Low, the initial state operating part 314 outputs a control signal which instructs the control circuit 312 to turn off the pMOS switch 110 (e.g., a Low signal) to the control circuit 312. Thereby, at the timing of power-on, the pMOS switch is turned off, and the output voltage of the step-down regulator 107 is applied to the internal logic circuit 208 and to the functional module 106. Accordingly, even when the host device 302 having a high variation speed of an application voltage drastically decreases the application voltage to 3.3V, the 3.3V series voltage is not applied to the blocks that are operated with the 1.8V series voltage, thereby preventing stress destruction and the like due to excessive voltage.

Further, during the initial state (the state before initialization is performed), only the initial state operating part 314 is operated, and the initial state halting part 313 is halted. In the initial state, the VCO 109 is halted, and the functional module 106 is in the standby state or in the halting state. Therefore, current hardly flows, and power is not consumed. If the host device 302 applies the 1.8V series voltage from the first stage, the output transistor of the step-down regulator 107 is turned on and thereby ON resistance occurs. However, since current hardly flows in the initial state, an IR drop that occurs due to the ON resistance can be kept to the minimum.

After the initialization, the initial state halting part 313 is also operated to perform control for transmission of signals with the host device 302, control for such as write/read/deletion of data to/from the functional module 106, and control for oscillation/halting of the VCO 109.

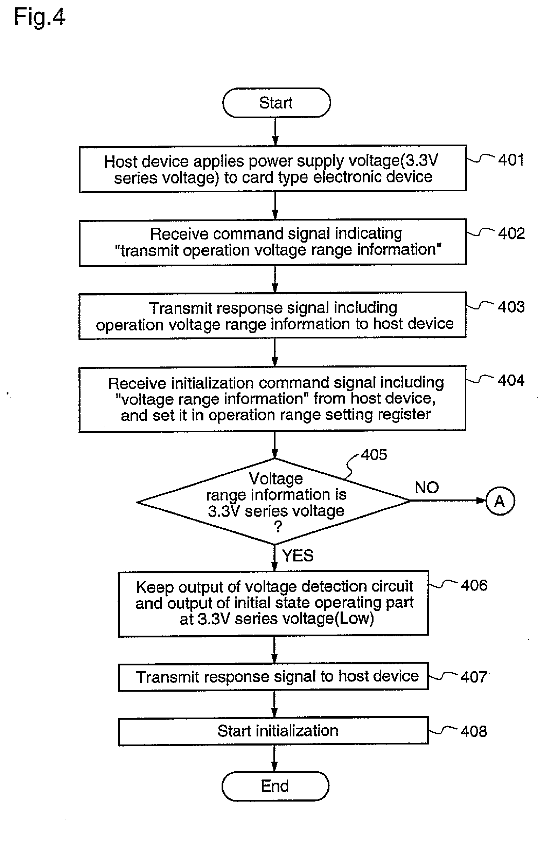

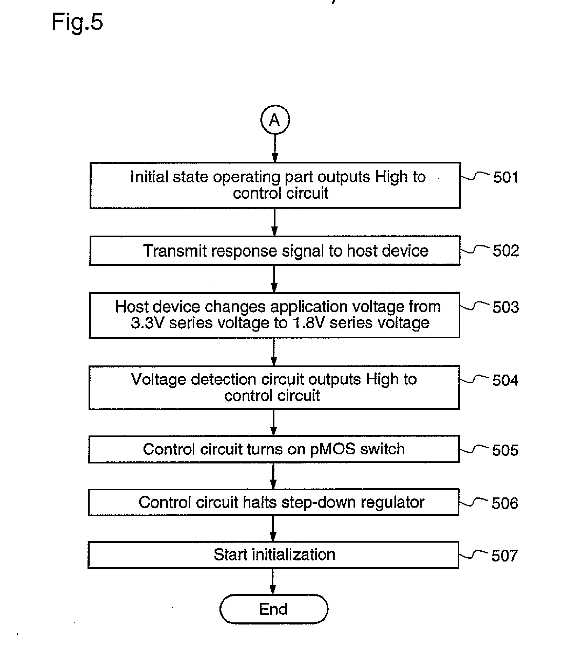

Hereinafter, a description will be given of process steps to be performed until the host device 302 determines the operation voltage range of the card type electronic device 301 and the card type electronic device 301 starts initialization, with reference to flowcharts shown in figures 4 and 5. It is assumed that the host device 302 initially applies a 3.3V series voltage to the card type electronic device 301.

Initially, in step 401, the host device 302 applies a 3.3V series voltage as a power supply voltage to the card type electronic device 301. The voltage detection circuit 111 detects it and outputs a Low signal, and the initial state operating part 314 also outputs a Low signal. Since the "Low signal" means switch OFF of the pMOS switch 110, the pMOS switch 110 is in the OFF state, and an output voltage from the step-down regulator 107 is applied to the blocks operating with a 1.8V series voltage, such as the internal logic circuit 308 and the functional module 106.

In step 402, the card type electronic device 301 receives, from the host device 302, a command signal instructing to transmit operation voltage range information.

In step 403, the card type electronic device 301 transmits a response signal including the operation voltage range information to the host device 302.

In step 404, the card type electronic device 301 receives an initialization command signal. The initialization command signal includes operation voltage range information for during initialization and after initialization, and the internal logic circuit 308 sets this information on the operation voltage range setting register.

In step 405, when the voltage range information transmitted from the host device 302 is the 3.3V series voltage, the process goes to step 406.

In step 406, both the output of the voltage detection circuit 111 and the output of the initial state operating part 314 are kept at "Low" that means the 3.3V series voltage. The power supply voltage is supplied from the output of the step-down regulator 107 to the internal logic circuit 308 and the functional module 106.

In step 407, the card type electronic device 301 transmits a response signal to the host device 302.

In step 408, the card type electronic device 301 starts initialization. At this time, the VCO 309 starts oscillation, and outputs a clock signal to the initial state halting part 313. Further, the functional module 106 also goes in the operating state, and the internal logic circuit 308 starts processing such as write/read of data to/from the functional module 106.

Next, a description will be given of process steps to be performed when a 1.8V series voltage is set in step 405, with reference to figure 5.

In step 501, the initial state operating part 314 outputs a High signal indicating a 1.8V series voltage to the control circuit 312. At this time, the output of the voltage detection circuit 111 is a Low signal that means a 3.3V series voltage.

In step 502, the card type electronic device 301 transmits a response signal to the host device 302.

In step 503, the host device 302 changes the voltage applied to the card type electronic device 301 from the 3.3V series voltage to the 1.8V series voltage.

In step 504, the voltage detection circuit 111 detects that the voltage of the power supply line 104 becomes 1.95V or lower, and outputs a High signal to the control circuit 312.

In step 505, the control circuit 312 turns on the pMOS switch 110 (closes the pMOS switch 110) since both the input signals become High.

In step 506, the control circuit 312 waits until the pMOS switch 110 is completely turned on, and then halts the step-down regulator 107. When the step-down regulator 107 is halted, its output is in the high impedance state. At this time, since the step-down regulator 107 is not operated, power consumption is reduced. Further, the power supply voltage is applied through the pMOS switch 110 to the internal logic circuit 308 and the functional module 106 which operate with the 1.8V series voltage.

In step 507, the card type electronic device 301 starts initialization.

Through the above-mentioned steps, the host device 302 determines the operation voltage range of the card type electronic device 301, and the card type electronic device 301 starts initialization.

Since the voltage detection circuit 111 exists, even if the timing when the host device 302 lowers the voltage is not constant in step 503, the pMOS switch 110 is turned on when the power supply voltage is equal to or lower than 1.95V, and thereby the step-down regulator 107 is halted. Accordingly, the 3.3V series voltage is not applied to the blocks operating with the 1.8V series voltage.

Further, in steps 401 and 402, the host device 302 transmits the command signal including the operation voltage range information, and the card type electronic device 301 transmits a response signal as a response to the command signal, and thereafter, the host device 302 transmits the initialization command signal in step 403. However, steps 401 and 402 may be skipped and the initialization command signal may be transmitted in step 403.

As described above, in the card type electronic device 301 according to the second embodiment, before initialization, the initial state operating part 314 in the internal logic circuit 308 receives an initialization command signal from the host device 302, and outputs operation voltage information indicating voltages during initialization and after initialization, which is included in the initialization command signal. Then, the control circuit 312 controls ON/OFF of the pMOS switch 110 and the step-down regulator 107 on the basis of the information from the voltage detection circuit 111 and the information from the internal logic circuit 308. Therefore, even when the host device 302 drops the power supply voltage from the 3.3V series voltage to the 1.8V series voltage after the host device 302 transmits the information of the voltage range to be applied during initialization and after initialization to the card type electronic device 301, it is possible to prevent the 3.3V series voltage from being applied to the blocks operating with the 1.8V series voltage regardless of the timing of the voltage drop.

For example, even if the power supply voltage that is actually supplied from the power supply line 104 is a 3.3V series voltage while the voltage range information included in the command signal from the host device 302 is a 1.8V series voltage, since information indicating the 3.3V series voltage (e.g., Low signal) is outputted from the voltage detection circuit 111 to the control circuit 312, the pMOS switch 110 is not turned on, and the 3.3V series voltage is not applied to the internal logic circuit 308 and the functional module 106.

In this second embodiment, on the assumption that the variation speed of the power supply voltage applied from the host device 302 is high, the pMOS switch 110 is turned off and the step-down regulator 107 is turned on when the power supply is turned on. However, when the variation speed of the power supply voltage applied from the host device 302 is moderate, it is not necessary to turn off the pMOS switch and turn on the step-down regulator 107 when the power supply is turned on.

While in this second embodiment two kinds of voltages, i.e., a 3.3V series voltage and a 1.8V series voltage, are adopted, the present invention is not restricted by these voltage values.

### (Embodiment 3)

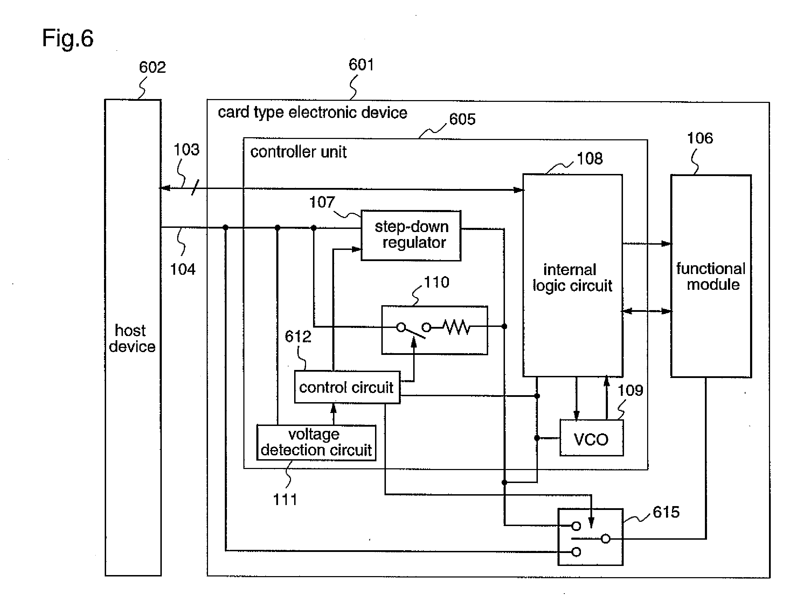

A card type electronic device according to a third embodiment of the present invention will be described with reference to figure 6. In this third embodiment, it is assumed that the card type electronic device is a function expansion card having a radio LAN function. However, the card type electronic device of the present invention is not restricted to the function expansion card having a radio LAN function. Figure 6 is a block diagram illustrating the construction of the card type electronic device according to the third embodiment. In figure 6, the same blocks as those of the card type electronic device according to the first embodiment shown in figure 1 are given the same reference numerals to omit the description thereof. In this third embodiment, a host device 602 is a portable digital music player having an insertion slot for the card type electronic device 601. In figure 6, the respective constituent blocks are connected with each other by solid lines with arrows and solid lines without arrows, and the solid lines with arrows indicate signal transmission lines while the solid lines without arrows indicate power supply voltage application lines.

In this third embodiment, it is assumed that the functional module 106 constantly needs a large current. Therefore, an IR drop that occurs due to a resistance at a switch junction plane of the pMOS switch 110 becomes non-negligibly large, leading to a possibility that the voltage applied to the blocks subsequent to the pMOS switch 110 might be considerably lower than the 1.8V series voltage.

Accordingly, the card type electronic device 601 according to the third embodiment is provided with a relay circuit 615 for selectively changing the power supply voltage to be applied to the functional module 106. The card type electronic device 601 of the third embodiment is different from the card type electronic device 101 of the first embodiment in this point.

The relay circuit 615 is connected to the two lines, i.e., the power supply line 104, and the output line of the step-down regulator 107 or the output line of the pMOS switch 110. The connection of the relay circuit 615 is switched with the output of the control circuit 612 being a switching signal, and applies, to the functional module 106, either the power supply voltage via the power supply line 104 or the power supply voltage via the output line of the step-down regulator 107 or the output line of the pMOS switch 110.

When the control circuit 612 turns on the pMOS switch 110, it changes the switching signal so that the relay circuit 615 selects the power supply line 104. When the pMOS switch 110 is on, the power supply voltage of the power supply line 104 is the 1.8V series voltage, whereby the power supply voltage within an appropriate voltage range, i.e., the 1.8V series voltage, is applied to the functional module 106. Thereby, the power supply voltage via the pMOS switch, which is lowered due to the IR drop, is not applied to the functional module 106 that constantly needs a large current.

As described above, in the card type electronic device 601 according to the third embodiment, when the pMOS switch 110 is on, the power supply voltage is supplied from the power supply line 104 through the relay circuit 615 to the functional module 106. Therefore, even when the card type electronic device 601 is equipped with the functional module 106 such as a radio LAN that needs a large current, an appropriate power supply voltage can be applied to the blocks operating with only the 1.8V series voltage.

While in this third embodiment two kinds of voltages, i.e., a 3.3V series voltage and a 1.8V series voltage, are adopted, the present invention is not restricted by these voltage values.

### (Embodiment 4)

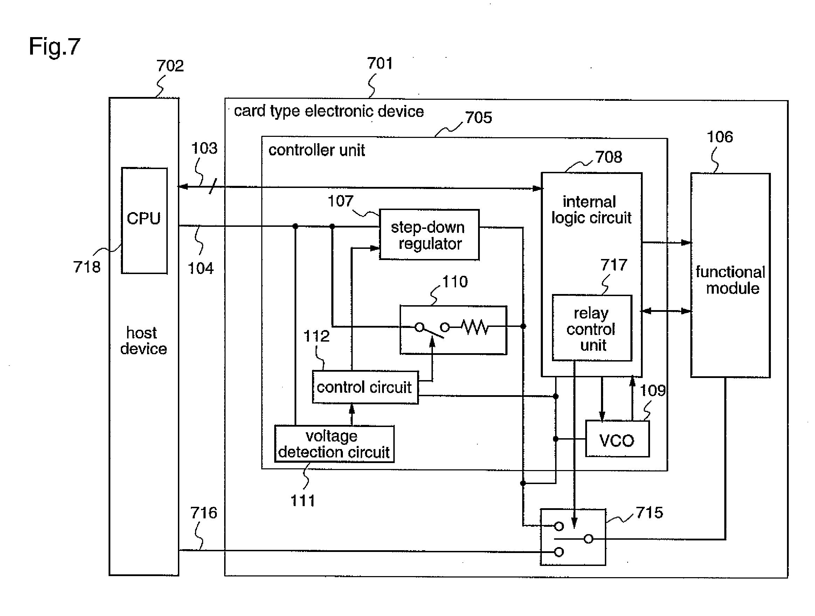

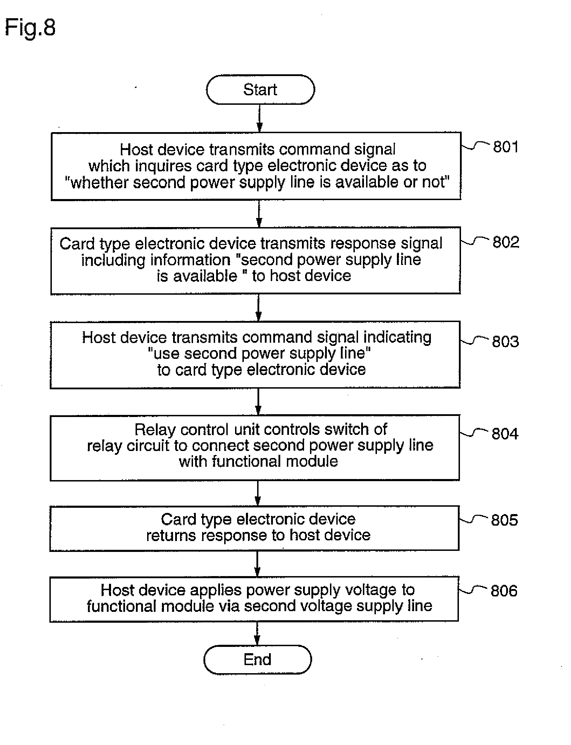

A card type electronic device and a host device according to a fourth embodiment of the present invention will be described with reference to figures 7 and 8. In this fourth embodiment, the card type electronic device is a memory card equipped with a flash memory. However, the card type electronic device of the present invention is not restricted to the memory card. Figure 7 is a block diagram illustrating the construction of the card type electronic device according to the fourth embodiment. In figure 7, the same blocks as those of the card type electronic device according to the first embodiment shown in figure 1 are given the same reference numerals to omit the description thereof. In figure 7, the respective constituent blocks are connected with each other by solid lines with arrows and solid lines without arrows, and the solid lines with arrows indicate signal transmission lines while the solid lines without arrows indicate power supply lines.

In this fourth embodiment, the host device 702 is a note type personal computer having an insertion slot for the card type electronic device 701. The functional module 106 of the card type electronic device 701 instantaneously needs a large current. Therefore, there is a possibility that the output voltage might be instantaneously lower than the 1.8V series voltage when the power supply voltage is applied from the step-down regulator 107 to the functional module 106. Further, there is a possibility that an IR drop occurs due to a resistance at the junction plane of the pMOS switch and thereby the voltage applied to the blocks subsequent to the pMOS switch 110 might be lower than the 1.8V series voltage.

Accordingly, in this fourth embodiment, a second power supply line 716 is provided between the host device 702 and the card type electronic device 701. The host device 702 can apply the power supply voltage to the card type electronic device 701 through the second power supply line 716. When the power supply voltage is applied through the second power supply line 716, a CPU 718 of the host device 702 previously confirms as to whether the card type electronic device 701 can receive the power supply voltage via the second power supply line 716 or not, and then transmits information indicating that application of the power supply voltage should be started from the second power supply line, to the card type electronic device 701, and starts application of the power supply voltage when it receives a response to the information.

The internal logic circuit 708 in the card type electronic device 701 includes a relay control unit 717. The relay control unit 717 has information as to whether the power supply voltage can be applied to the functional module 106 via the second power supply line 716. When the relay control unit 717 receives, from the host device 702, the information indicating that application of the power supply voltage should be started, it outputs a switching signal to control the switch of the relay circuit 715 to make the second power supply line 716 usable.

Hereinafter, a description will be given of the operation when the host device 702 applies the power supply voltage via the second power supply line 716. It is assumed that, at the start of the operation shown in the flowchart, the relay circuit 715 selects the output line of the step-down regulator 107 or the pMOS switch 110 to apply the power supply voltage to the functional module 106.

In step 801, the CPU 718 of the host device 702 transmits, to the card type electronic device 701, a command signal which inquires as to whether application of the power supply voltage via the second power supply line 716 is possible or not. This command signal is received by the relay control unit 717 of the card type electronic device 701.

In step 802, the card type electronic device 701 transmits, to the host device 702, a response signal including information indicating that the second power supply line 716 is available.

In step 803, the CPU 718 receives the response signal from the card type electronic device 701, and transmits a command signal indicating that the second power supply line 716 is to be used, to the card type electronic device 701.

In step 804, the relay control unit 717 outputs a switching signal to control the switch of the relay circuit 715 to select the second power supply line 716 side. At this time, the second power supply line 716 and the functional module 106 are connected.

In step 805, the card type electronic device 701 returns a response to the command signal received in step 803 (transmits a response signal) to the host device 702.

In step 806, the CPU 718 checks that the response signal is returned, and applies the power supply voltage via the second power supply line 716 to the functional module 106.

As described above, the card type electronic device 701 and the host device 702 according to the fourth embodiment are provided with the second power supply line 716, and the power supply voltage can be applied through the second power supply line 716 to the functional module 106. Therefore, even when the functional module 106 instantaneously needs a large current, it is possible to apply the power supply voltage to the functional module 106 from a stable power supply such as a battery or an AC adapter.

While in this fourth embodiment two kinds of voltages, i.e., a 3.3V series voltage and a 1.8V series voltage, are adopted, the present invention is not restricted by these voltage values.

### APPLICABILITY IN INDUSTRY

The present invention is useful as a card type electronic device which operates with power supply voltages in two kinds of voltage ranges such as a 3.3V series voltage and a 1.8V series voltage, and a host device which can supply a power supply voltage through a specific power supply line to a functional module in the card type electronic device.

## Claims

1. A card type electronic device comprising:
a power supply line which receives, from a host device, a power supply voltage within a first voltage range and a power supply voltage within a second voltage range that is lower than the first voltage range;
a functional module which operates within the second voltage range to perform predetermined functions;
a pMOS switch connected to the power supply line;
a step-down regulator connected to the power supply line, for stepping down the power supply voltage of the power supply line to the second voltage range;
a voltage detection circuit for detecting a power supply voltage value of the power supply line to output information as to whether the power supply voltage value exceeds a predetermined voltage value or not;
a control circuit which receives the information from the voltage detection circuit, and turns on the pMOS switch and halts the step-down regulator when the power supply voltage of the power supply line is equal to or lower than the predetermined voltage value, while turns off the pMOS switch and activates the step-down regulator when the power supply voltage of the power supply line exceeds the predetermined voltage value; and
an internal logic circuit which is operated with the power supply voltage via the pMOS switch or the output voltage from the step-down regulator to perform control of the functional module or control of communication with the outside.

2. A card type electronic device as defined in Claim 1 wherein said voltage detection circuit detects whether the power supply voltage of the power supply line exceeds a maximum value in the second voltage range or not.

3. A card type electronic device as defined in Claim 1 further including:
an oscillator for generating a clock signal for operating the internal logic circuit; and
said oscillator being operated with the power supply voltage via the pMOS switch or the output voltage from the step-down regulator.

4. A card type electronic device as defined in Claim 1 wherein said control circuit halts the step-down regulator after turning on the pMOS switch when the power supply voltage of the power supply line is equal to or lower than the predetermined voltage, while the control circuit turns off the pMOS switch after activating the step-down regulator when the power supply voltage of the power supply line exceeds the predetermined voltage value.

5. A card type electronic device as defined in Claim 1 further including:
at least one signal line for transmitting/receiving a clock signal, a command signal, a response signal, and a data signal between the internal logic circuit and the host device;
wherein, before the card type electronic device is initialized by the host device, said internal logic circuit receives voltage range information of a power supply voltage to be supplied from the host device during initialization and after initialization, from the host device through the signal line, and then outputs the received information to the control circuit; and
said control circuit receives the information from the voltage detection circuit and the internal logic circuit, and turns on the pMOS switch and halts the step-down regulator only when the power supply voltage of the power supply line is equal to or lower than the predetermined value and the information of the second voltage range is supplied from the internal logic circuit as the voltage range information, and otherwise, the control circuit turns off the pMOS switch and activates the step-down regulator.

6. A card type electronic device as defined in Claim 5 wherein, when the power is turned on, said internal logic circuit outputs a control signal for turning off the pMOS switch to the control circuit.

7. A card type electronic device as defined in Claim 5 wherein said internal logic circuit has an initial state operating part that operates before initialization, and only the initial state operating part operates before initialization to receive the voltage range information from the host device, and generate a control signal for tuning off the pMOS switch.

8. A card type electronic device as defined in Claim 1 further including:
a relay circuit for selectively switching the power supply voltage applied to the functional module, said relay circuit being connected to two kinds of lines, i.e., the output line of the step-down regulator or the output line of the pMOS switch and the power supply line; and
said relay circuit selecting the power supply line when the pMOS switch is on to apply the power supply voltage to the functional module.

9. A card type electronic device as defined in Claim 1 further including:
at least one signal line for transmitting/receiving a clock signal, a command signal, a response signal, and a data signal between the internal logic circuit and the host device;
a second power supply line for the functional module; and
a relay circuit for selectively switching the power supply voltage applied to the functional module, said relay circuit being connected to two kinds of lines, i.e., the output line of the step-down regulator or the output line of the pMOS switch and the power supply line;
wherein said internal logic circuit has a relay control circuit for controlling the relay circuit; and
said relay control circuit previously holds information as to whether the power supply voltage can be supplied from the second power supply line to the functional module or not, and when the relay control circuit receives, from the host device, a command signal instructing application of the power supply voltage from the second power supply line, it outputs a switching signal to the relay circuit to make the relay circuit select the power supply voltage of the second power supply line as a power supply voltage for the functional module.

10. A host device comprising:
a central processing unit for generating a command signal, a clock signal, or a data signal to be transmitted to a card type electronic device, and receiving and processing a response signal or a data signal transmitted from the card type electronic device;
a power supply line for applying a power supply voltage to the card type electronic device;
at least one signal line for receiving/transmitting the clock signal, the command signal, the response signal, and the data signal from/to the card type electronic device; and
a second power supply line for a functional module included in the card type electronic device;
wherein said central processing unit transmits a command signal that inquires the card type electronic device as to whether application of the power supply voltage by the second power supply line is possible or not, and when the central processing unit obtains information indicating that application of the power supply voltage by the second power supply line is possible, as a response signal from the card type electronic device, it transmits a command signal indicating that application of the power supply voltage is to be started from the second power supply line to the card type electronic device, and then starts application of the power supply voltage from the second power supply line.

## Amended claims

### Amended claims under Art. 19.1 PCT

1. (Deleted)

2. (Deleted)

3. (Deleted)

4. (Deleted)

5. (Amended) A card type electronic device comprising:
a power supply line which receives, from a host device, a power supply voltage within a first voltage range and a power supply voltage within a second voltage range that is lower than the first voltage range;
a functional module which operates within the second voltage range to perform predetermined functions;
a pMOS switch connected to the power supply line;
a step-down regulator connected to the power supply line, for stepping down the power supply voltage of the power supply line to the second voltage range;
a voltage detection circuit for detecting a power supply voltage value of the power supply line to output information as to whether the power supply voltage value exceeds a predetermined voltage value or not;
a control circuit which receives the information from the voltage detection circuit, and turns on the pMOS switch and halts the step-down regulator when the power supply voltage of the power supply line is equal to or lower than the predetermined voltage value, while turns off the pMOS switch and activates the step-down regulator when the power supply voltage of the power supply line exceeds the predetermined voltage value;
an internal logic circuit which is operated with the power supply voltage via the pMOS switch or the output voltage from the step-down regulator to perform control of the functional module or control of communication with the outside; and
at least one signal line for transmitting/receiving a clock signal, a command signal, a response signal, and a data signal between the internal logic circuit and the host device;
wherein, before the card type electronic device is initialized by the host device, said internal logic circuit receives voltage range information of a power supply voltage to be supplied from the host device during initialization and after initialization, from the host device through the signal line, and then outputs the received information to the control circuit; and
said control circuit receives the information from the voltage detection circuit and the internal logic circuit, and turns on the pMOS switch and halts the step-down regulator only when the power supply voltage of the power supply line is equal to or lower than the predetermined value and the information of the second voltage range is supplied from the internal logic circuit as the voltage range information, and otherwise, the control circuit turns off the pMOS switch and activates the step-down regulator.

6. A card type electronic device as defined in Claim 5 wherein, when the power is turned on, said internal logic circuit outputs a control signal for turning off the pMOS switch to the control circuit.

7. A card type electronic device as defined in Claim 5 wherein said internal logic circuit has an initial state operating part that operates before initialization, and only the initial state operating part operates before initialization to receive the voltage range information from the host device, and generate a control signal for tuning off the pMOS switch.

8. (Amended) A card type electronic device comprising:
a power supply line which receives, from a host device, a power supply voltage within a first voltage range and a power supply voltage within a second voltage range that is lower than the first voltage range;
a functional module which operates within the second voltage range to perform predetermined functions;
a pMOS switch connected to the power supply line;
a step-down regulator connected to the power supply line, for stepping down the power supply voltage of the power supply line to the second voltage range;
a voltage detection circuit for detecting a power supply voltage value of the power supply line to output information as to whether the power supply voltage value exceeds a predetermined voltage value or not;
a control circuit which receives the information from the voltage detection circuit, and turns on the pMOS switch and halts the step-down regulator when the power supply voltage of the power supply line is equal to or lower than the predetermined voltage value, while turns off the pMOS switch and activates the step-down regulator when the power supply voltage of the power supply line exceeds the predetermined voltage value;
an internal logic circuit which is operated with the power supply voltage via the pMOS switch or the output voltage from the step-down regulator to perform control of the functional module or control of communication with the outside; and
a relay circuit for selectively switching the power supply voltage applied to the functional module, said relay circuit being connected to two kinds of lines, i.e., the output line of the step-down regulator or the output line of the pMOS switch and the power supply line; and
said relay circuit selecting the power supply line when the pMOS switch is on to apply the power supply voltage to the functional module.

9. (Amended) A card type electronic device comprising:
a power supply line which receives, from a host device, a power supply voltage within a first voltage range and a power supply voltage within a second voltage range that is lower than the first voltage range;
a functional module which operates within the second voltage range to perform predetermined functions;
a pMOS switch connected to the power supply line;
a step-down regulator connected to the power supply line, for stepping down the power supply voltage of the power supply line to the second voltage range;
a voltage detection circuit for detecting a power supply voltage value of the power supply line to output information as to whether the power supply voltage value exceeds a predetermined voltage value or not;
a control circuit which receives the information from the voltage detection circuit, and turns on the pMOS switch and halts the step-down regulator when the power supply voltage of the power supply line is equal to or lower than the predetermined voltage value, while turns off the pMOS switch and activates the step-down regulator when the power supply voltage of the power supply line exceeds the predetermined voltage value;
an internal logic circuit which is operated with the power supply voltage via the pMOS switch or the output voltage from the step-down regulator to perform control of the functional module or control of communication with the outside;
at least one signal line for transmitting/receiving a clock signal, a command signal, a response signal, and a data signal between the internal logic circuit and the host device;
a second power supply line for the functional module; and
a relay circuit for selectively switching the power supply voltage applied to the functional module, said relay circuit being connected to two kinds of lines, i.e., the output line of the step-down regulator or the output line of the pMOS switch and the power supply line;
wherein said internal logic circuit has a relay control circuit for controlling the relay circuit; and
said relay control circuit previously holds information as to whether the power supply voltage can be supplied from the second power supply line to the functional module or not, and when the relay control circuit receives, from the host device, a command signal instructing application of the power supply voltage from the second power supply line, it outputs a switching signal to the relay circuit to make the relay circuit select the power supply voltage of the second power supply line as a power supply voltage for the functional module.

10. (Deleted)
